# EUROPEAN PATENT APPLICATION

(11) **EP 2 660 840 A1**
(43) Date of publication of application: **06.11.2013**
(21) Application number: 11852488.3
(22) Date of filing: 28.11.2011
(51) Int. Cl.: H01H 39/00

(54) **CUTTING DEVICE**

(30) Priority: 27.12.2010 JP 2010290492
(71) Applicant: Daikin Industries, Ltd., Osaka-shi, Osaka 530-8323 (JP)
(72) Inventor: UKON, Tetsuya, Settsu-shi Osaka 566-8585 (JP); TSUCHIYA, Teruaki, Settsu-shi Osaka 566-8585 (JP); OKUGAWA, Futoshi, Settsu-shi Osaka 566-8585 (JP)
(74) Representative: Goddar, Heinz J.
(86) International application number: PCT/JP2011/006613
(87) International publication number: WO 2012/090388

(57) **Abstract**

A cutter includes a blade (30) and a case. A harness (12) is placed across a second hole (46). A second inner cylinder member (45) has a back-side inner wall (47b) extending from the harness (12) toward a first inner cylinder member (41), for guiding a cutting portion (31) to the harness (12).

## Description

### TECHNICAL FIELD

The present invention relates to cutters configured to cut current-carrying members through which current flows.

### BACKGROUND ART

Cutters configured to cut current-carrying members through which current flows have been known. Cutters of this type are used to shut off power from a power supply, for example, in disaster situations. Patent Document 1 shows a cutter which includes a blade having an approximately columnar cutting portion, and which is configured such that the blade propelled by an explosion of an explosive that fills a gas generation chamber in a cylindrical case moves forward to cut a target current-carrying member with the cutting portion.

### CITATION LIST

### PATENT DOCUMENT

Patent Document 1: Japanese Patent Publication No. 2010-86653

### SUMMARY OF THE INVENTION

### TECHNICAL PROBLEM

To cut a current-carrying member with reliability, a blade of the cutter shown in Patent Document 1 may be provided with a guide which leads a cutting portion to the current-carrying member. However, if the blade is provided with a guide, the shape of the blade may be complicated and the cost for the blade may be increased.

The present invention is thus intended to simplify a shape of a blade.

### SOLUTION TO THE PROBLEM

The first aspect of the present invention is directed to a cutter, including: a blade (30) which has a cutting portion (31), and a case member (11) which accommodates the blade (30) such that the blade (30) is movable in a forward and backward direction, the cutter being configured such that the blade (30) is moved in a predetermined forward direction by increasing a pressure in the case member (11) by a high-pressure gas generated by a reaction of a gas-generating agent, thereby cutting, with the cutting portion (31), a current-carrying member (12) which is located forward of the blade (30) and through which electricity flows, wherein the case member (11) includes a first cylinder member (41) having a first hole (42) in which the blade (30) is accommodated, and a second cylinder member (45) located adjacent to the first cylinder member (41) and having a second hole (46) connected to the first hole (42) and capable of receiving the blade (30), the current-carrying member (12) is placed across the second hole (46), and the second cylinder member (45) has an extended inner wall (47b) that is an inner wall (47) of the second hole (46) which is extended toward the first cylinder member (41) from the current-carrying member (12), for guiding the cutting portion (31) to the current-carrying member (12).

According to the first aspect of the present invention, the case member (11) includes the first cylinder member (41) and the second cylinder member (45) arranged adjacent to each other. The first cylinder member (41) has the first hole (42) which accommodates the blade (30) that has not moved forward yet. The second cylinder member (45) has the second hole (46) connected to the first hole (42) and capable of receiving the blade (30). The current-carrying member (12) is placed across the second hole (46). The second cylinder member (45) has an extended inner wall (47b) that is an inner wall (47) of the second hole (46) which is extended toward the first cylinder member (41) from the current-carrying member (12).

When the high-pressure gas is generated by a reaction of the gas-generating agent, the pressure in the case member (11) increases, and the blade (30) in the first cylinder member (41) moves forward in a predetermined forward direction and enters in the second hole (46). At this moment, the blade (30) is guided by the extended inner wall (47b) which is an extended inner wall (47) of the second hole (46), and the cutting portion (31) is led to the current-carrying member (12). Since the current-carrying member (12) is placed across the second hole (46), the current-carrying member (12) is cut by the cutting portion (31) which has reached the current-carrying member (12) when the blade (30) travels in the second hole (46).

The second aspect of the present invention is that in the first aspect of the present invention, the second cylinder member (45) is positioned such that a back end of the extended inner wall (47b) is located back of a front end of the blade (30) in the forward direction of the blade (30) in a state where the blade (30) is not moved forward yet.

According to the second aspect of the present invention, the second cylinder member (45) is positioned such that the back end of the extended inner wall (47) is located back of the front end of the blade (30) which has not moved forward yet.

When the high-pressure gas is generated by a reaction of the gas-generating agent, the pressure in the case member (11) increases, and the blade (30) in the first cylinder member (41) moves forward in a predetermined forward direction and enters in the second hole (46). Since the front end of the blade (30) is located back of the back end of the extended inner wall (47b) (i.e., the front end of the blade (30) and the back end of the extended inner wall (47b) overlap each other), the blade (30) is guided by the extended inner wall (47b), and the cutting portion (31) is led to the current-carrying member (12). Since the current-carrying member (12) is placed across the second hole (46), the current-carrying member (12) is cut by the cutting portion (31) which has reached the current-carrying member (12) when the blade (30) travels in the second hole (46).

The third aspect of the present invention is that in the first or second aspect of the present invention, the second cylinder member (45) has a groove (48) which is cut out in the forward direction of the blade (30), for placing the current-carrying member (12) therein, at a periphery of one side of the second hole (46) through which the blade (30) enters.

According to the third aspect of the present invention, the second cylinder member (45) has a groove (48) which is cut out in the forward direction of the blade (30) at a periphery of one side of the second hole (46) through which the blade (30) enters. The current-carrying member (12) is placed in the groove (48), and the current-carrying member (12) is supported on the bottom portion of the groove (48). The second cylinder member (45) has the extended inner wall (47b) that is the inner wall (47) of the second hole (46) which is extended toward the first cylinder member (41) from the current-carrying member (12). Thus, the extended inner wall (47b) can guide the blade (30) and lead the cutting portion (31) to the current-carrying member (12).

When the high-pressure gas is generated by a reaction of the gas-generating agent, the pressure in the case member (11) increases, and the blade (30) in the first cylinder member (41) moves forward in a predetermined forward direction and enters in the second hole (46). At this moment, the blade (30) is guided by the extended inner wall (47b), and the cutting portion (31) is led to the current-carrying member (12). Since the current-carrying member (12) is placed across the second hole (46), the current-carrying member (12) is cut by the cutting portion (31) which has reached the current-carrying member (12) when the blade (30) travels in the second hole (46).

The fourth aspect of the present invention is that in any one of the first to third aspects of the present invention, a depth of the groove (48) is greater than a thickness of the current-carrying member (12) in a cutting direction.

According to the fourth aspect of the present invention, the current-carrying member (12) placed in the groove (48) is supported on the bottom portion of the groove (48). Further, the depth of the groove (48) is greater than the thickness of the current-carrying member (12) in a cutting direction. Thus, even in a state where the current-carrying member (12) is placed in the groove (48), the extended inner wall (47b) of the second cylinder member (45) protrudes to the first cylinder member (41) from the current-carrying member (12). Thus, the extended inner wall (47b) can guide the blade (30) and lead the cutting portion (31) to the current-carrying member (12).

When the high-pressure gas is generated by a reaction of the gas-generating agent, the pressure in the case member (11) increases, and the blade (30) in the first cylinder member (41) moves forward in a predetermined forward direction and enters in the second hole (46). At this moment, the blade (30) is guided by the extended inner wall (47b), and the cutting portion (31) is led to the current-carrying member (12). Since the current-carrying member (12) is placed across the second hole (46), the current-carrying member (12) is cut by the cutting portion (31) which has reached the current-carrying member (12) when the blade (30) travels in the second hole (46).

The fifth aspect of the present invention is that in the first to fourth aspects of the present invention, the second cylinder member (45) is made of an electrically insulating material.

According to the fifth aspect of the present invention, the current-carrying member (12) is placed across the second hole (46) of the second cylinder member (45). Further, the second cylinder member (45) is made of an electrically insulating material. Thus, the insulation capability of the current-carrying member (12) after cutting is increased.

### ADVANTAGES OF THE INVENTION

According to the first aspect of the present invention, the blade (30) can be guided by the extended inner wall (47b) continuous with the inner wall (47) of the second hole (46). Thus, the cutting portion (31) can be led to the current-carrying member (12) without providing a guide, etc., on the blade side. The shape of the blade (30) can be accordingly simplified.

According to the second aspect of the present invention, the back end of the extended inner wall (47b) and the front end of the blade (30) overlap each other. Thus, the blade (30) can be reliably guided by the extended inner wall (47b). The cutting portion (31) can thus be led to the current-carrying member (12) without providing a guide, etc., on the blade side. The shape of the blade (30) can be accordingly simplified.

According to the third aspect of the present invention, the groove (48) can accommodate and support the current-carrying member (12). Thus, the current-carrying member (12) can be easily placed across the second hole (46) of the second cylinder member (45).

According to the fourth aspect of the present invention, the depth of the groove (48) is greater than the thickness of the current-carrying member (12). Thus, even in the state where the current-carrying member (12) is placed in the groove (48), the extended inner wall (47b) can easily protrude from the current-carrying member (12) to the first cylinder member (41). As a result, it is possible to lead the cutting portion (31) to the current-carrying member (12), while holding the current-carrying member (12).

According to the fifth aspect of the present invention, the second cylinder member (45) is made of an electrically insulating material. Thus, it is possible to increase the insulating properties around the current-carrying member (12) placed across the second hole (46). As a result, the insulation capability of the current-carrying member (12) after cutting can be increased.

### BRIEF DESCRIPTION OF THE DRAWINGS

FIG. 1 is a vertical cross-sectional view showing a cutter of the first embodiment.
FIG. 2 is a cross-sectional view taken along the line II-II of FIG. 1.
FIG. 3 is an oblique view showing an external structure of the cutter of the first embodiment.
FIG. 4 is an oblique view showing an internal structure of the cutter of the first embodiment.
FIG. 5 shows oblique views of a blade and a second inner cylinder member of the first embodiment.
FIG. 6 is a schematic view of a breaker of the second embodiment.
FIG. 7 is a schematic view of a contactor of the third embodiment.
FIG. 8 is a schematic view of an electric circuit breaker of the fourth embodiment.
FIG. 9 shows schematic views of a blade and a second inner cylinder member of another embodiment of the first to fourth embodiments.

### DESCRIPTION OF EMBODIMENTS

Embodiments of the present invention will be described in detail below with reference to the drawings.

### <First Embodiment of the Invention>

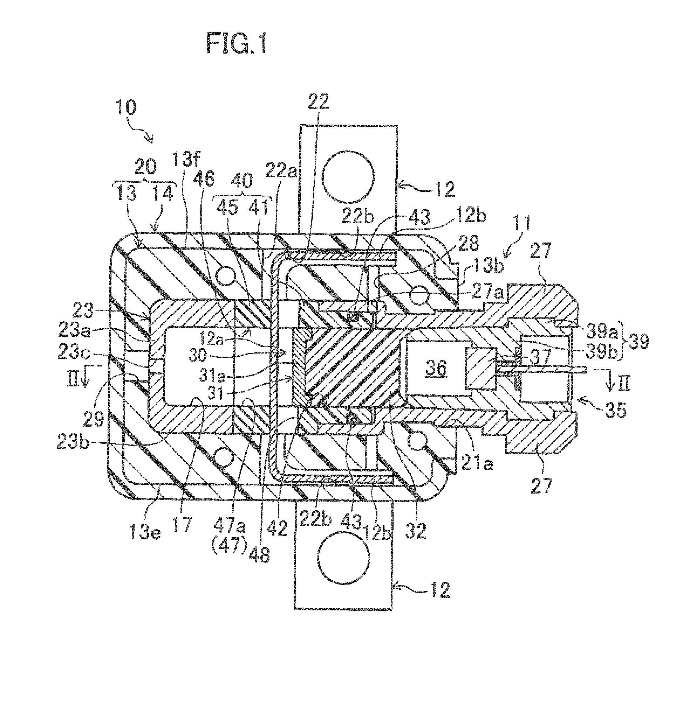

As shown in FIG. 1 to FIG. 4, a cutter (10) according to the first embodiment is configured to cut a harness (12), which comprises a current-carrying member of the present invention, by moving a blade (30) forward using high-pressure gas generated by a reaction of a gas-generating agent. The cutter (10) uses an explosive as the gas-generating agent for generating high-pressure gas.

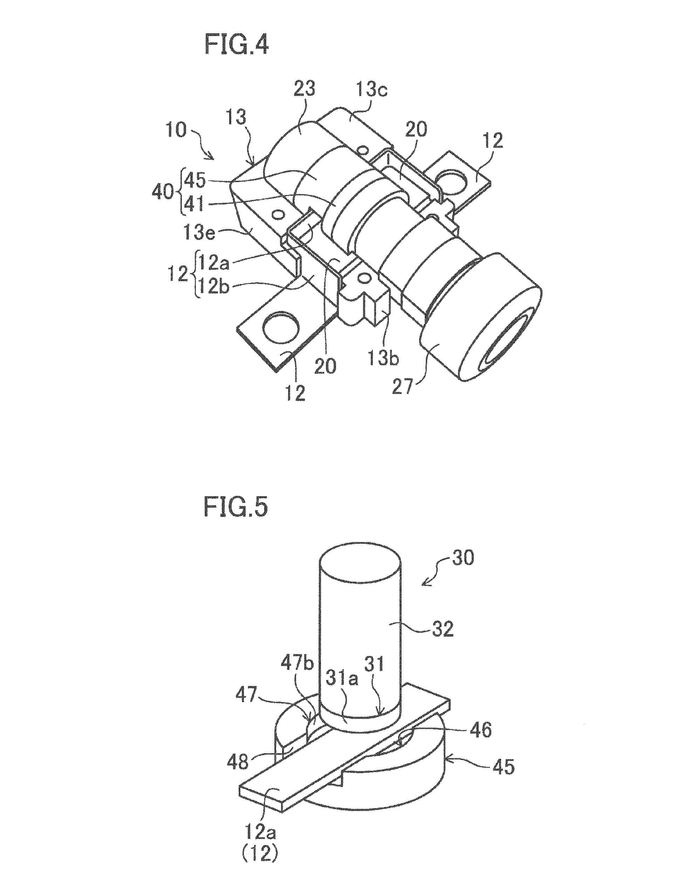

Specifically, the cutter (10) includes a case (11) as illustrated in FIG. 1 and FIG. 4, and a stopper (23), an inner cylinder (40), a blade (30), and a gas generator (35) are accommodated in the case (11). The case (11) comprises a case member of the present invention.

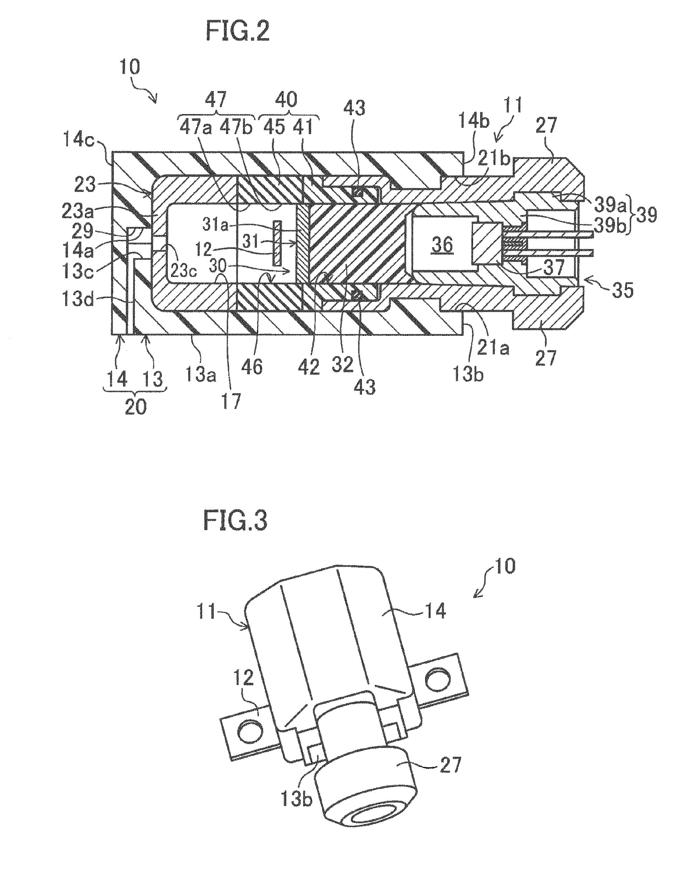

For convenience of explanation, the left-hand side of FIG. 2 is hereinafter referred to as the "front side," the right-hand side of FIG. 2 is hereinafter referred to as the "back side," the upper side of FIG. 2 is hereinafter referred to as the "upper side," and the lower side of FIG. 2 is hereinafter referred to as the "lower side." The front side of the drawing sheet of FIG. 2 in the direction orthogonal to the drawing sheet is hereinafter referred to as the "left side," and the back side thereof is hereinafter referred to as the "right side."

As illustrated in FIG. 1 to FIG. 4, the case (11) includes a box-shaped resin case (20) and a cylindrical metal case (27). A front portion of the metal case (27) is accommodated in a below-described insertion hole (21) in the resin case (20).

The resin case (20) is made of a resin, such as polycarbonate (PC). The resin material which forms the resin case (20) is not limited to the PC resin, and may be a resin material, e.g., plastic. The resin case (20) includes an approximately rectangular parallelepiped base (13) and a cover (14) which continuously covers surfaces of the base (13) except a lower surface (13a) and a back surface (13b) of the base (13).

A groove (21a) having a semicircular cross-section is formed in an upper surface (13c) of the base (13). The groove (21a) extends from the back surface (13b) of the base (13) toward a front surface (13d) thereof, and is open only on the back surface (13b).

The cover (14) covers the upper surface (13c), the front surface (13d), a left surface (13e) and a right surface (13f) of the base (13). A groove (21 b) which corresponds to the groove (21a) in the base (13) is formed in an opposed surface (14a) of the cover (14) which faces the upper surface (13c) of the base (13). The groove (21b) extends from the back surface (14b) of the cover (14) toward the front surface (14c) thereof, and is open only on the back surface (14b).

With this configuration, an approximately cylindrical insertion hole (21) which is open on the back end surface of the resin case (20) is formed in the resin case (20) by the groove (21a) of the base (13) and the groove (21b) of the cover (14). The insertion hole (21) accommodates the stopper (23), the inner cylinder (40), and the front portion of the metal case (27) in sequential order from the front end toward the back end of the insertion hole (21).

Further, the resin case (20) has a placement hole (22) which is astride the base (13) and the cover (14), and is configured to place the harness (12) therein. The placement hole (22) is symmetric with respect to a vertical plane including the axis of the insertion hole (21). Specifically, the placement hole (22) extends laterally outward from a longitudinally central portion of the insertion hole (21), is subsequently bent backward, and is then bent downward, and extends to the lower surface (13a) of the base (13). Part of the placement hole (22) which is from a portion extending laterally outward from the insertion hole (21) to a portion bent backward is a narrow portion (22a), and part of the placement hole (22) which extends downward thereafter is a wide portion (22b) whose width is larger than the width of the narrow portion (22a).

The harness (12) to be placed in the placement hole (22) is in a long plate shape, and has a narrow portion (12a) bent into an approximately U-shape and two wide portions (12b) continuously provided on both ends of the narrow portion (12a) as illustrated in FIG. 1 and FIG. 4. Each of the two wide portions (12b) is a plate-like piece in an approximately L-shape. Part of the harness (12) is placed in the placement hole (22) of the resin case (20) such that the narrow portion (12a) is located in the narrow portion (22a) of the placement hole (22), and such that part of the narrow portion (12a) is located in the wide portion (22b) of the placement hole (22). The narrow portion (12a) comprises a portion at which the harness (12) is cut.

The resin case (20) further includes an exhaust passage (28) which connects the insertion hole (21) and the placement hole (22) and which is astride the base (13) and the cover (14). The exhaust passage (28) comprises part of an exhaust gas passage configured to exhaust high-pressure gas generated by a below-described gas generator (35) to move the blade (30) forward. The exhaust passage (28) is formed such that one end thereof communicates with the insertion hole (21) on the back side of the narrow portion (22a) of the placement hole (22), and such that the other end communicates with the wide portion (22b) of the placement hole (22).

The resin case (20) further includes an exhaust hole (29) configured to exhaust air from the front end of the insertion hole (21). The exhaust hole (29) extends forward from a central portion of the front end of the insertion hole (21), and is then bent downward to the lower surface (13a) of the base (13).

The stopper (23) is configured to receive and stop the blade (30) moving forward. The stopper (23) is made of a resin material formed in the shape of a bottomed cylinder, and located at a front end portion of the insertion hole (21). Specifically, the stopper (23) has a disk-like bottom portion (23a) and a cylindrical cylinder portion (23b), and is disposed such that the bottom portion (23a) is located forward of the cylinder portion (23b) at the front end portion of the insertion hole (21). A hole (23c) is formed in a central portion of the bottom portion (23a) to communicate with the exhaust hole (29) of the resin case (20). Further, the cylinder portion (23b) is configured to have an inner diameter through which the blade (30) can travel.

The inner cylinder (40) is disposed behind the stopper (23) in the insertion hole (21) to support the harness (12). The inner cylinder (40) includes a first inner cylinder member (41) and a second inner cylinder member (45). In the insertion hole (21), the first inner cylinder member (41) is located forward of the metal case (27), and the second inner cylinder member (45) is located behind the stopper (23).

The first inner cylinder member (41) is configured to accommodate the blade (30) inside, and comprises a first cylinder member of the present invention. The first inner cylinder member (41) is made of a resin formed in an approximately cylindrical shape, and is located forward of the metal case (27) in the insertion hole (21) so as to be coaxial with the second inner cylinder member (45). The first inner cylinder member (41) is configured such that the outer diameter of the front portion thereof is approximately equal to the inner diameter of the insertion hole (21), and the first inner cylinder member (41) has a smaller outer diameter at a back portion thereof than the front portion. An annular groove is formed in the outer circumferential surface of the back portion of the first inner cylinder member (41), and an O ring (43) is placed in the groove. A first hole (42) is formed in the center of the first inner cylinder member (41).

The first hole (42) extends along an axial direction of the first inner cylinder member (41), and has an approximately circular cross section. The first hole (42) is configured such that the inner diameter thereof is approximately equal to the inner diameter of the cylinder portion (23b) of the stopper (23).

Details of the second inner cylinder member (45) will be described later.

The metal case (27) is made of a metal material formed in an approximately cylindrical shape. A front portion of the metal case (27) is housed in the insertion hole (21), and a back portion of the metal case (27) is exposed from the resin case (20). The front portion of the metal case (27) is disposed behind the first inner cylinder member (41) in the insertion hole (21) so as to be coaxial with the first inner cylinder member (41). A front end portion of the metal case (27) is fitted to the outer surface of the back portion of the first inner cylinder member (41). The gap between the back portion of the first inner cylinder member (41) and the front end portion of the metal case (27), which is fitted to the outer surface of the back portion of the first inner cylinder member (41), is sealed with the O ring (43). A through hole (27a) is formed in the front end portion of the metal case (27). The through hole (27a) is formed at a location corresponding to the exhaust passage (28) of the resin case (20). The inner diameter of the front portion of the metal case (27), except the inner diameter of the front end portion, is approximately equal to the inner diameter of the first inner cylinder member (41), and the outer diameter of the front portion of the metal case (27) is approximately equal to the inner diameter of the insertion hole (21).

The stopper (23), the inner cylinder (40), and the metal case (27) which are housed in the insertion hole (21) form an approximately cylindrical passage (17) therein. The cylindrical passage (17) has a front end portion blocked by the bottom portion (23a) of the stopper (23), and a back end portion blocked by the gas generator (35) housed in the metal case (27). Part of the narrow portion (12a) of the harness (12) housed in the placement hole (22) is exposed in the cylindrical passage (17), and the blade (30) is housed in a space between the exposed part and the gas generator (35).

The gas generator (35) is configured to generate high-pressure gas for letting the blade (30) move forward to cut the harness (12). The gas generator (35) includes an explosive as a gas-generating agent, an igniter (37) configured to initiate the explosive, and a lid member (39) configured to hold the igniter (37) and block the back end portion of the cylindrical passage (17).

The lid member (39) includes a cylinder portion (39a) formed in an approximately cylindrical shape and fitted to an inner surface of the metal case (27), and a blocking portion (39b) which holds the igniter (37) and blocks a middle portion of the cylinder portion (39a). The cylinder portion (39a) and the blocking portion (39b) are integrally formed using a metal material. A closed space is formed behind the blade (30) in the cylindrical passage (17) by the blocking portion (39b), and the closed space forms a gas generation chamber (36) filled with the explosive.

The igniter (37) is a detonator, and is held by the blocking portion (39b) of the lid member (39) such that a front end portion of the igniter (37) at which a primary explosive is contained is exposed in the gas generation chamber (36).

With this configuration, when the igniter (37) allows the explosive in the gas generation chamber (36) to explode, high-pressure gas is generated in the gas generation chamber (36), and the high-pressure gas increases the pressure in the gas generation chamber (36), thereby moving the blade (30) forward.

As shown in FIG. 1, the blade (30) is configured to move forward in the cylindrical passage (17) formed in the insertion hole (21) due to the high-pressure gas, and cut the harness (12). As shown in FIG. 5, the blade (30) includes a cutting portion (31) and a pusher (32) to which the cutting portion (31) is secured.

The pusher (32) is configured to move the blade (30) forward due to the pressure of the high-pressure gas of the igniter (37). The pusher (32) is made of resin in an approximately columnar shape. The cutting portion (31) is attached to the front end of the pusher (32).

The cutting portion (31) is configured to cut the harness (12). The cutting portion (31) has an edge portion (31 a) made of a metal material (e.g., steel) at the front end of the cutting portion (31). The edge portion (31a) is in a columnar shape with a flat cutting edge end. The blade (30) which has not moved forward yet is disposed such that the front end of the edge portion (31 a) of the blade (30) is located forward of the back end of a back-side inner wall (47b) of an inner wall (47) described later.

As shown in FIG. 5, the second inner cylinder member (45) supports the harness (12) and is configured to guide the blade (30). The second inner cylinder member (45) comprises a second cylinder member of the present invention. The second inner cylinder member (45) is a ceramic member having an approximately cylindrical shape and insulating properties. The second inner cylinder member (45) is located between the stopper (23) and the first inner cylinder member (41) in the insertion hole (21) so as to be coaxial with the stopper (23). The outer diameter of the second inner cylinder member (45) is approximately equal to the inner diameter of the insertion hole (21). A second hole (46) and cutout grooves (48) are formed in the second inner cylinder member (45).

The cutout grooves (48, 48) are a pair of grooves configured to support the harness (12) on the back of the second inner cylinder member (45), and comprises a groove of the present invention. The pair of cutout grooves (48, 48) are formed in the second inner cylinder member (45) at locations which correspond to the placement hole (22) of the resin case (20). The cutout grooves (48) are formed such that the centers of the grooves are aligned with each other, with the second hole (46) interposed therebetween. Each cutout groove (48) extends from an outer circumferential surface to an inner circumferential surface of a back end portion of the second inner cylinder member (45), and has a rectangular cross section slightly larger than the rectangular cross section of the narrow portion (12a) of the harness (12). The depth of each cutout groove (48) is greater than the thickness of the narrow portion (12a) of the harness (12). The narrow portion (12a) of the harness (12) is supported by the two cutout grooves (48) from the back side of the second inner cylinder member (45), which means that the narrow portion (12a) is placed across the second hole (46).

The second hole (46) is a through hole which extends along an axial direction of the second inner cylinder member (45) from the front end to the back end of the second inner cylinder member (45), and which has an approximately circular cross section. The inner wall (47) of the second hole (46) is comprised of a front-side inner wall (47a) and the back-side inner wall (47b).

The front-side inner wall (47a) is a portion of the inner wall (47) which is located forward of the harness (12) in the state where the harness (12) is placed in the cutout grooves (48). The front-side inner wall (47a) has an inner diameter approximately equal to the inner diameter of the cylinder portion (23b) of the stopper (23).

The back-side inner wall (47b) is a portion of the inner wall (47) which is located behind the harness (12) in the state where the harness (12) is placed in the cutout grooves (48). The back-side inner wall (47b) comprises an extended inner wall of the present invention. The back-side inner wall (47b) has an inner diameter that is equal to the inner diameter of the front-side inner wall (47a). The back end of the back-side inner wall (47b) is located behind the front end of the edge portion (31 a) of the cutting portion (31). That is, the back end of the back-side inner wall (47b) and the front end of the edge portion (31a) of the cutting portion (31) of the blade (30) which has not moved forward yet are overlapped with each other in a transverse direction of the cutter (10) in FIG. 2. Thus, when the blade (30) moves forward, the edge portion (31a) moves forward in the second hole (46) along the back-side inner wall (47b), and the cutting portion (31) is guided to the narrow portion (12a) of the harness (12).

### -Operation-

The cutter (10) of the first embodiment is provided such that a harness (12) of an electrical device in a factory, for example, is inserted in the placement hole (22) and across the second hole (46).

The cutter (10) is provided, with the igniter (37) being connected to a fire alarm or an earthquake alarm, etc. When the fire alarm detects fire, or the earthquake alarm detects an earthquake, an alarm signal is fed to the igniter (37). When the alarm signal is fed to the igniter (37), the igniter (37) explodes the explosive in the gas generation chamber (36).

When the explosive goes off, high-pressure gas is generated in the gas generation chamber (36) by the explosion, which provides a thrust to the pusher (32) to cause the blade (30) to move forward. The back end of the back-side inner wall (47b) of the second inner cylinder member (45) is located behind the front end of the edge portion (31a) of the cutting portion (31) of the blade (30). Thus, the cutting portion (31) is reliably guided to the back-side inner wall (47b) as the pusher (32) moves forward, and the front end of the edge portion (31a) reaches the narrow portion (12a) of the harness (12) and cuts the narrow portion (12a) instantly. When the blade (30) moves further forward, the front end of the edge portion (31a) collides with the bottom portion (23a) of the stopper (23), and the blade (30) stops.

When the pusher (32) moves forward, the gas generation chamber (36) communicates with the through hole (27a) and the exhaust passage (28). When the gas generation chamber (36) communicates with the through hole (27a) and the exhaust passage (28), the high-pressure gas in the gas generation chamber (36) is exhausted to the outside through the through hole (27a) and the exhaust passage (28).

### -Advantages of the First Embodiment-

In the first embodiment, the back-side inner wall (47b), which is an extension of the inner wall (47) of the second hole (46), is provided to guide the blade (30). Thus, the cutting portion (31) can be led to the harness (12) without providing a guide, etc., on the blade side. The shape of the blade (30) can be accordingly simplified.

Since the back end of the back-side inner wall (47b) and the front end of the edge portion (31a) are overlapped with each other, the blade (30) can be reliably guided into the second hole (46). Thus, the cutting portion (31) can be led to the harness (12) without providing a guide, etc., on the blade side. The shape of the blade (30) can be accordingly simplified.

The cutout grooves (48) can accommodate and support the harness (12). Thus, the harness (12) can be easily placed across the second hole (46) of the second inner cylinder member (45).

The depth of each of the cutout grooves (48) is greater than the thickness of the harness (12). Thus, even if the harness (12) is placed in the cutout grooves (48), the back-side inner wall (47b) can protrude to the first inner cylinder member (41) from the harness (12). As a result, it is possible to lead the cutting portion (31) to the harness (12), while holding the harness (12).

Lastly, the second inner cylinder member (45) is made of an electrically insulating material. Thus, it is possible to increase the insulating properties around the harness (12) placed across the second hole (46). As a result, the insulation capability of the harness (12) after cutting can be increased.

### <Second Embodiment of the Invention>

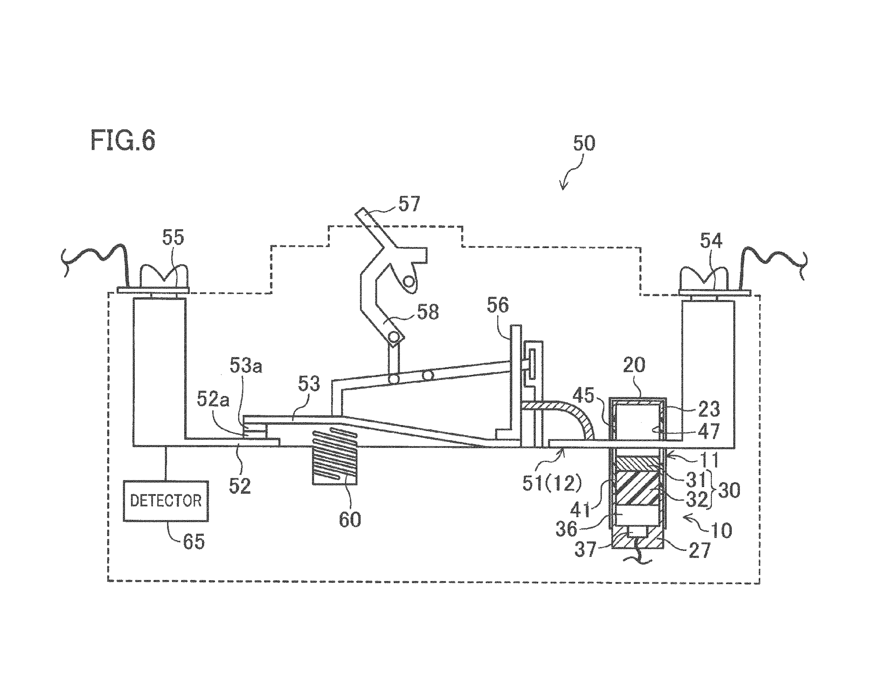

Now, the second embodiment will be described. As shown in FIG. 6, the second embodiment is directed to a breaker (50) including a cutter (10) of the present invention. The breaker (50) includes a load terminal (55) and a line terminal (54) provided on the resin casing (not shown), and a terminal-to-terminal connection member (51) which is a harness (12) configured to connect the load terminal (55) and the line terminal (54).

The terminal-to-terminal connection member (51) includes a stationary contact (52) connected to the load terminal (55), and a movable contact (53) connected to the line terminal (54). The movable contact (53) is movable between the contact location at which the movable contact (53) is in contact with the stationary contact (52) and a noncontact location at which the movable contact (53) is apart from the stationary contact (52). When the movable contact (53) moves to the contact location, a movable contact point (53a) of the movable contact (53) is in contact with a stationary contact point (52a) of the stationary contact (52).

Further, the breaker (50) includes a linkage (58) configured to move the movable contact (53) manually, a trip mechanism (56) configured to separate the movable contact (53) from the stationary contact (52) in the event of abnormal current conditions, and a bias spring (60) configured to bias the movable contact (53) to separate the movable contact (53) from the stationary contact (52). The linkage (58) is attached to the casing such that the movable contact (53) can be moved between the contact location and the noncontact location by operation of a manual lever (57). The trip mechanism (56) is made of bimetal, and provides connection between the movable contact (53) and the line terminal (54). The trip mechanism (56) is thermally deformed in the event of overcurrent conditions (abnormal current conditions), and the thermal deformation allows the linkage (58) to move, thereby separating the movable contact (53) from the stationary contact (52). When the movable contact (53) is separated from the stationary contact (52), the breaker (50) cannot be energized.

Furthermore, the breaker (50) includes the above-described cutter (10), and a weld detector (65) configured to detect the welding between the movable contact point (53a) and the stationary contact point (52a). Any one of the cutters (10) of the first embodiment and other embodiments described later may be used as the cutter (10) of the present embodiment.

The cutter (10) is located so as to be able to cut the terminal-to-terminal connection member (51). Specifically, the cutter (10) is located on the back surface (i.e., the lower surface in FIG. 6) of the terminal-to-terminal connection member (51).

The weld detector (65) is connected to, e.g., the terminal-to-terminal connection member (51) to detect whether or not the movable contact point (53a) and the stationary contact point (52a) are welded together based on a current value of the terminal-to-terminal connection member (51). An igniter (37) of the cutter (10) is connected to the weld detector (65). When the weld detector (65) determines that the movable contact point (53a) and the stationary contact point (52a) are welded together, the weld detector (65) actuates the igniter (37).

In the second embodiment, when the weld detector (65) determines that the movable contact point (53a) and the stationary contact point (52a) are welded together, the igniter (37) is actuated to explode an explosive, and the blade (30) moves forward. The blade (30) cuts (i.e., breaks) the terminal-to-terminal connection member (51), and then the pusher (32) stops while being in contact with the cut surfaces of the terminal-to-terminal connection member (51). This allows insulation between the cut surfaces of the terminal-to-terminal connection member (51), thereby disabling the passage of current between the line terminal (54) and the load terminal (55).

### -Advantages of Second Embodiment-

In the second embodiment, the cutter (10) can forcibly disable the passage of current between the line terminal (54) and the load terminal (55). Thus, for example, even when the movable contact (53) and the stationary contact (52) are welded together, the cutter (10) can forcibly disable the passage of current between the line terminal (54) and the load terminal (55) to prevent a breakdown of a load-side device. The other configurations, effects and advantages are the same as those in the first embodiment.

### <Third Embodiment of The Invention>

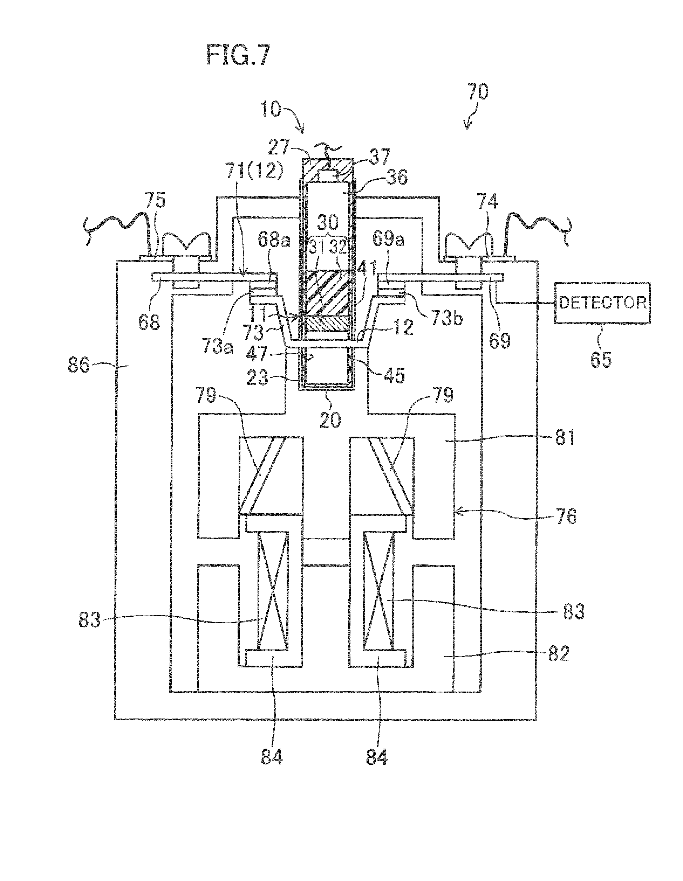

Now, the third embodiment will be described. As shown in FIG. 7, the third embodiment is directed to a contactor including a cutter (10) according to the present invention. As shown in FIG. 7, the contactor (70) includes a load terminal (75) and a line terminal (74) provided on a resin casing (86), and a terminal-to-terminal connection member (71) which is a harness (12) configured to connect the load terminal (75) and the line terminal (74).

The terminal-to-terminal connection member (71) includes a first stationary contact (68) connected to the load terminal (75), a second stationary contact (69) connected to the line terminal (74), and a movable contact (73) coupled to a movable core (81) described below. The movable contact (73) is movable between the contact location at which the movable contact (73) is in contact with a pair of stationary contacts (68, 69) and a noncontact location at which the movable contact (73) is apart from the pair of stationary contacts (68, 69). When the movable contact (73) moves to the contact location, a movable contact point (73a) at one end of the movable contact (73) comes in contact with the first stationary contact point (68a) of the first stationary contact (68), and a movable contact point (73b) at the other end of the movable contact (73) comes in contact with the second stationary contact point (69a) of the second stationary contact (69).

Further, the contactor (70) includes a transfer mechanism (76) configured to transfer the movable contact (73) between the contact location and the noncontact location. The transfer mechanism (76) includes the movable core (81), a stationary core (82), an exciting coil (83), and a spool (84). The stationary core (82) is fixed to the bottom surface of the casing (86). The movable core (81) faces an upper surface of the stationary core (82). The exciting coil (83) is wound around the spool (84). A pair of return springs (79) are provided between the movable core (81) and the spool (84) to separate the movable core (81) from the stationary core (82) when the contactor (70) is in a non-energized condition.

The transfer mechanism (76) is configured such that when the exciting coil (83) is energized by an external signal, the stationary core (82) is excited to attract the movable core (81). When the movable core (81) is attracted by the stationary core (82), the contactor (70) is in a non-energized condition. By contrast, the transfer mechanism (76) is configured such that when the energization of the exciting coil (83) is stopped by an external signal, the return springs (79) separate the movable core (81) from the stationary core (82). The separation of the movable core (81) from the stationary core (82) allows the contactor (70) to be in an energized condition.

Furthermore, the contactor (70) includes the above-described cutter (10), and a weld detector (65) having a configuration similar to that of the second embodiment. Any one of the cutters (10) of the first embodiment and other embodiments described later may be used as the cutter (10) of the present embodiment.

The cutter (10) is located so as to be able to cut the terminal-to-terminal connection member (71). Specifically, the cutter (10) is disposed such that a cutting portion (31) of the blade (30) which has not yet moved forward faces a front surface of the movable contact (73).

In the third embodiment, when the weld detector (65) determines that the movable contact points (73a, 73b) are each welded to a corresponding one of the stationary contact points (68a, 69a), the igniter (37) is actuated to explode an explosive, and the blade (30) moves forward. The blade (30) cuts the movable contact (73). In this situation, the pusher (32) is in contact with the cut surfaces of the movable contact (73). In other words, the blade (30) moves forward until the pusher (32) comes in contact with the cut surfaces of the movable contact (73).

### -Advantages of Third Embodiment-

In the third embodiment, the cutter (10) can forcibly disable the passage of current between the line terminal (74) and the load terminal (75). Thus, for example, even when the movable contact (73) and the stationary contacts (68, 69) are welded together, the cutter (10) can forcibly disable the passage of current between the line terminal (74) and the load terminal (75) to prevent a breakdown of a load-side device. The other configurations, effects and advantages are the same as those in the first embodiment.

### <Fourth Embodiment of Invention>

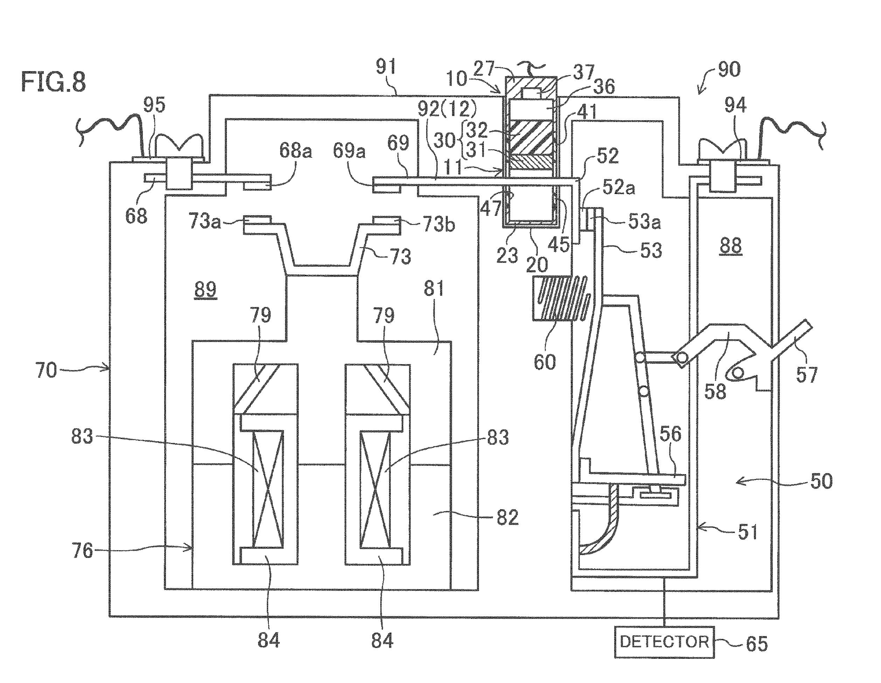

Now, the fourth embodiment will be described. As shown in FIG. 8, the fourth embodiment is directed to an electric circuit breaker (90) including a cutter (10) of the present invention. The electric circuit breaker (90) includes a breaker (50), a contactor (70), and a resin casing (91). Descriptions of the breaker (50) and the contactor (70) are not given.

A breaker placement chamber (88) in which the breaker (50) is placed, and a contactor placement chamber (89) in which the contactor (70) is placed are formed in the casing (91) with a barrier interposed therebetween. The casing (91) includes a load terminal (95), a line terminal (94), and a connection member (92) providing connection between the breaker (50) and the contactor (70). The connection member (92) is a harness (12).

The load terminal (95) is connected to a first stationary contact (68) of the contactor (70). The line terminal (94) is connected to a movable contact (53) of the breaker (50). Further, one end of the connection member (92) is connected to the second stationary contact (69) of the contactor (70). The other end of the connection member (92) is connected to the stationary contact (52) of the breaker (50).

Moreover, the electric circuit breaker (90) includes the above-described cutter (10), and a weld detector (65) similar to that of the second embodiment. Any one of the cutters of the first embodiment and other embodiments described later may be used as the cutter (10) of the present embodiment.

The cutter (10) is located so as to be able to cut the connection member (92). Specifically, the cutter (10) is disposed such that a cutting portion (31) of a blade (30) which has not yet moved forward faces a front surface of the connection member (92).

In the fourth embodiment, when the weld detector (65) determines that in the breaker (50), the movable contact (53) and the stationary contact (52) are welded together, or when the weld detector (65) determines that in the contactor (70), the movable contact (73) and the stationary contacts (68, 69) are welded together, the weld detector (65) actuates the igniter (37), and the blade (30) moves forward to cut (i.e., break) the connection member (92). In this situation, the pusher (32) is in contact with the cut surfaces of the connection member (92). In other words, the blade (30) moves forward until the pusher (32) comes in contact with the cut surfaces of the connection member (92).

### -Advantages of Fourth Embodiment-

In the fourth embodiment, the cutter (10) cuts the connection member (92), thereby disabling the passage of current between the line terminal (94) and the load terminal (95). Thus, for example, even when, in the breaker (50) or the contactor (70), contacts are welded together, the cutter (10) can disable the passage of current between the line terminal (94) and the load terminal (95) to prevent a breakdown of a load-side device. The other configurations, effects and advantages are the same as those in the first embodiment.

### <Other Embodiments>

The first to fourth embodiments of the present invention may have the following configurations.

In the first embodiment, the edge portion (31 a) with a flat front end is used, but in the present invention, the shape of the edge portion may have two different heights, for example, or may be in a V-shape opening toward the front end.

In the first embodiment, the stopper (23) is made of a metal material, but the material forming the stopper (23) is not limited to the metal material, and may be made of a resin material, e.g., plastic, for example.

In the first embodiments, the second inner cylinder member (45) is made of ceramic. However, the material forming the second inner cylinder member (45) is not limited to ceramic, and may be a material having insulating properties, such as a resin material, such as, plastic.

In the first embodiment, the case (11) includes the resin case (20) and the metal case (27), but the entire case (11) may be made of resin.

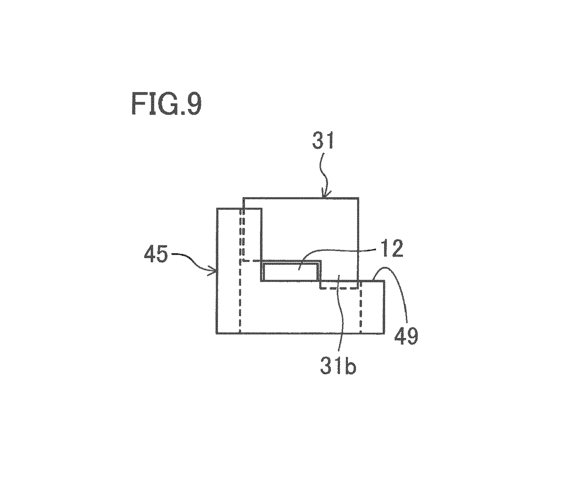

In the first embodiment, the cutout grooves (48) are formed in the second inner cylinder member (45), but the present invention is not limited to this configuration. Specifically, as shown in FIG. 9, a cutout (49) is formed in the second inner cylinder member (45), and a guide portion (31b) is provided at the front end of the cutting portion (31) of the blade (30). The cutout (49) is formed by cutting a portion of the second inner cylinder member (45) from the back end portion thereof toward the front side, the portion being in an approximately semicircular shape extending from the outer circumferential surface to the inner circumferential surface of the second inner cylinder member (45). The depth of the cutout (49) is greater than the thickness of the narrow portion (22a) of the harness (12). The guide portion (31b) extends from the front end of the cutting portion (31) to a side of the narrow portion (22a) of the harness (12).

The foregoing embodiments are merely preferred examples in nature, and are not intended to limit the scope of the present invention, applications, and use of the invention.

### INDUSTRIAL APPLICABILITY

As described above, the present invention is useful as a cutter configured to cut a current-carrying member.

### DESCRIPTION OF REFERENCE CHARACTERS

- 11: case
- 30: blade
- 31: cutting portion
- 41: first inner cylinder member
- 42: first hole
- 45: second inner cylinder member
- 46: second hole
- 47: inner wall
- 47b: back-side inner wall
- 48: cutout groove

## Claims

1. A cutter, comprising: a blade (30) which has a cutting portion (31); and a case member (11) which accommodates the blade (30) such that the blade (30) is movable in a forward and backward direction, the cutter being configured such that the blade (30) is moved in a predetermined forward direction by increasing a pressure in the case member (11) by a high-pressure gas generated by a reaction of a gas-generating agent, thereby cutting, with the cutting portion (31), a current-carrying member (12) which is located forward of the blade (30) and through which electricity flows, wherein
the case member (11) includes a first cylinder member (41) having a first hole (42) in which the blade (30) is accommodated, and a second cylinder member (45) located adjacent to the first cylinder member (41) and having a second hole (46) connected to the first hole (42) and capable of receiving the blade (30),
the current-carrying member (12) is placed across the second hole (46), and
the second cylinder member (45) has an extended inner wall (47b) that is an inner wall (47) of the second hole (46) which is extended toward the first cylinder member (41) from the current-carrying member (12), for guiding the cutting portion (31) to the current-carrying member (12).

2. The cutter of claim 1, wherein
the second cylinder member (45) is positioned such that a back end of the extended inner wall (47b) is located back of a front end of the blade (30) in the forward direction of the blade (30) in a state where the blade (30) is not moved forward yet.

3. The cutter of claim 1, wherein
the second cylinder member (45) has a groove (48) which is cut out in the forward direction of the blade (30), for placing the current-carrying member (12) therein, at a periphery of one side of the second hole (46) through which the blade (30) enters.

4. The cutter of claim 1, wherein
a depth of the groove (48) is greater than a thickness of the current-carrying member (12) in a cutting direction.

5. The cutter of claim 1, wherein
the second cylinder member (45) is made of an electrically insulating material.
